# EUROPEAN PATENT SPECIFICATION

(11) **EP 4 491 519 B1**
(45) Date of publication and mention of the grant of the patent: **02.09.2026**
(21) Application number: 23184804.5
(22) Date of filing: 11.07.2023
(51) Int. Cl.: E05B 53/00, E05C 17/00, E05C 1/14, B64D 29/06, E05D 11/10, B64D 29/08, B64C 1/14

(54) **AN ASSEMBLY WITH AN OPEN-DOOR LOCKING SYSTEM**
ANORDNUNG MIT EINEM OFFENTÜRVERRIEGELUNGSSYSTEM
ENSEMBLE AVEC SYSTÈME DE VERROUILLAGE DE PORTE OUVERTE

(43) Date of publication of application: 15.01.2025
(73) Proprietor: AIRBUS HELICOPTERS DEUTSCHLAND GmbH, 86609 Donauwörth (DE)
(72) Inventor: BAUER, Karl, 81369 MUNICH (DE); DENECKE, Ulrich, 85521 RIEMERLING (DE); KLASSEN, Viktor, 86399 BOBINGEN (DE); HAUBER, Michael, 91781 WEISSENBURG (DE); HOMMEL, Johannes, 89437 HAUNSHEIM (DE); SEIDL, Sebastian, 86477 ADELSHEID (DE)
(74) Representative: GPI Brevets

(56) References cited:
- WO-A1-88/00272
- DE-U1- 20 209 030
- FR-A1- 2 920 461
- GB-A- 2 347 172

## Description

The present invention relates to an assembly with a carrier element, a hinged door that is pivotally mounted to the carrier element and pivotable between a closed position and an open position, and an open-door locking system for locking the hinged door in the open position. The present invention further relates to an aircraft comprising such an assembly.

Assemblies with carrier elements and hinged doors which are pivotally mounted to the carrier elements and pivotable between closed positions and open positions are widely used. For instance, such carrier elements may be formed by cowlings of aircrafts and the hinged doors may be cowling access doors which are pivotally mounted to the cowlings.

In general, a cowling may be used in aviation for drag reduction or engine cooling by directing airflow. The cowling may also cover a part of the fuselage, the engines, and/or a part of the cockpit of an aircraft. Cowling access doors usually provide access to the machinery of the aircraft that is hidden from the outside by the cowling, for example to enable maintenance work on the machinery.

During such maintenance work, open holding systems that may be mounted to the cowling or to the cowling access door usually secure the cowling access door in an open position. Conventional open holding systems that enable the securing of the cowling access door in an open position include gas springs and/or hold open rods.

Such gas springs and/or hold open rods usually extend from one extremity of the cowling access door to the remaining part of the cowling. Unfortunately, gas springs and/or hold open rods often restrict and/or hinder a maintenance worker's access to the machinery. Moreover, gas springs do not protect against unintended closing of the cowling access door and require maintenance due to the aging of gaskets, while hold open rods require a two-hands operation and take a lot of space for installation.

Alternatively, open holding systems sometimes include the use of folding struts for securing a cowling access door in an open position. Such folding struts are usually not in the way of maintenance workers. However, folding struts usually also require a two-hands operation.

The document EP 0 839 714 A1 describes a latch for a thrust reverser duct on an aircraft engine. The latch accomplishes work during both the closing stroke and the handle folding stroke. An outer handle release trigger can lock an outer handle to an inner handle to fix the relative position of the outer handle, the inner handle, an idler link, a rocker link and a secondary link. While they are in fixed position, the parts act as a closing handle unit during the closing stroke. Once the closing stroke is completed, the inner handle is locked into a fixed position with hook arm and a primary link. The outer handle release trigger can then be disengaged and the secondary link, the rocker link and the idler link work to provide mechanical advantage during the folding of the outer handle.

The document EP 1 066 195 A1 describes a remotely actuated latch mechanism for securing a cowling to an engine pylon including a handle having a closed and an open position, which is connected to a remote latch. The remote latch comprises a housing, a linking mechanism mounted to the housing, and a strut connected to the linking mechanism at a first end and to a keeper at a second end. The handle is connected to the linking mechanism of the remote latch by a push/pull cable. The actuation of the handle from the closed position to the open position causes the push/pull cable to move the linking mechanism of the remote latch such that the strut moves from a closed to an open position relative to the keeper allowing the cowling of the aircraft to then be pivoted open. The strut and the keeper are securely engaged in both the open and closed position insuring that when the latch is remotely opened and closed that the keeper is always properly engaged and that the latch properly closes.

The document EP 1 379 745 A2 describes a lever that is actuatable to unlatch a pawl when the lever is in an unlocked position. When the lever is in a locked position, lever actuation cannot unlatch the pawl. An over-center device coupled to the lever can be used to position the lever in its locked and unlocked positions. The lever may be moved away from the pawl when the lever is in a locked position and is moved closer to the pawl when the lever is in an unlocked position. Alternatively, the lever is pivotable about a pivot point that remains in the same location with respect to the lever in the unlocked and locked positions thereof. Although not required, the pawl is movable by the lever to its unlatched state after the partially or fully-actuated lever has been moved to its unlocked state.

The document EP 4 067 235 A1 describes an open holding system for a cowling access door of a cowling, wherein the cowling access door is movable between a closed position and an open position. The open holding system comprises a hinge bracket, a cowling access door holder, and a remote actuator. The hinge bracket is adapted for pivotally attaching the cowling access door to the cowling. The cowling access door holder comprises an overcentering latch that is in an unclamped state when the cowling access door is in the closed position and movable from the unclamped state to an over-centered state when the cowling access door is moved from the closed position to the open position. The overcentering latch automatically latches in the over-centered state to prevent the cowling access door from returning to the closed position. A release system is coupled to the overcentering latch and adapted for transitioning the overcentering latch from the over-centered state to the unclamped state. The remote actuator is located spaced apart from the release system on the cowling access door and adapted for remotely actuating the release system.

However, the open holding system described hereabove is comparatively heavy and requires a comparatively great mounting space. Furthermore, it is difficult to disassemble the cowling access door when using the open holding system and a respectively obtainable opening angle of the cowling access door is comparatively restricted. Moreover, other ones of the open holding systems described above lack an automatic latching feature to automatically secure an associated cowling access door in the open position during an opening operation. Some also require a two-hands operation during an opening and/or a closing operation of the cowling access door.

The document DE20209030 describes a locking device in a vehicle door holder, which is adapted to releasably lock first and second parts relative one to the other in various latch positions. One functional part is attached to the door and has recesses distributed over a movement path. The other functional part is attached to a door support has a holding element arranged in a guide receptacle and a slide-like blocking element. The holding element and the slide-like blocking element are arranged such that in a blocking position of the latter, the holding element is held in engagement in one of the holding recesses. In a release position the holding element is freely movable in the guide receptacle to release the holding recess.

The document GB2347172 describes a door hinge device for a building door, to be automatically maintained in an opened state, for safety reasons. The door hinge device comprises a first support element fastened to a door and a second support element fastened to a door frame. The first support element has a rotary cylindrical part and the second support element has a pair of fixed cylindrical parts. The fixed cylindrical parts are longitudinally aligned with both ends of the rotary cylindrical part. For imposing an automatic torsional closing force on said door first means are provided that increases the torsional force when the door is opened. For maintaining the door in an opened state second torsional means are provided.

It is, therefore, an object of the present invention to provide a new cowling assembly with a cowling, a cowling access door that is pivotally mounted to the cowling and pivotable between a closed position and an open position, and a new cowling access door locking system for locking the cowling access door in the open position, which overcomes the above-described drawbacks of the prior art. More specifically, the new cowling access door locking system is provided for automatically securing the cowling access door in the open position after an opening operation and it is operable with a single hand, prevents an unintended closing during maintenance work, has an easily accessible release mechanism, a very compact design and comprises less constituent components, is easier to produce and assemble, and comparatively inexpensive to manufacture compared to state-of-the-art open holding systems. Another object of the present invention is to provide a new aircraft comprising such a new cowling assembly.

The above-mentioned object is solved by a cowling assembly with a cowling, a cowling access door that is pivotally mounted to the cowling and pivotable between a closed position and an open position, and a cowling access door locking system for locking the cowling access door in the open position, as described below. More generally, the above-mentioned object is solved by an assembly with a carrier element, a hinged door that is pivotally mounted to the carrier element and pivotable between a closed position and an open position, and an open-door locking system for locking the hinged door in the open position, comprising the features of claim 1.

More specifically, an assembly with a carrier element, a hinged door that is pivotally mounted to the carrier element and pivotable between a closed position and an open position, and an open-door locking system for locking the hinged door in the open position is provided. The open-door locking system comprises a hinge bracket and an open-door locking device. The hinge bracket is rigidly attached to the carrier element and comprises a locking notch. The open-door locking device comprises a mounting bracket that is pivotally mounted to the hinge bracket, a housing that is connected to the mounting bracket and rigidly attached to the hinged door, a sliding block that is accommodated in the housing and slidable in the housing in a first direction between a normal position and an actuated position, and a slider that is accommodated in the housing and slidable in the housing in a second direction between a blocking position and a releasing position. The slider is coupled to the sliding block such that the slider is in the blocking position and engages the locking notch of the hinge bracket for blocking the hinged door in the open position when the sliding block is in the normal position.

Advantageously, the assembly allows to lock the hinged door securely and reliably in the open position using the open-door locking system for preventing an unintended closing of the hinged door. Thus, if the carrier element is e. g. a cowling of an aircraft and the hinged door is e. g. a cowling access door that provides access to machinery covered by the cowling, then maintenance personal may work on the machinery efficiently and securely with both hands.

The open-door locking system is advantageously robust and easy to use, requires a comparatively small installation space, is light-weight, consists of a reduced part of constituent components with only few moving components, requires a comparatively small technical effort, and enables implementation of a greater opening angle of the hinged door. Furthermore, it is comparatively cost-efficient and may easily be installed on existing arrangements, thereby allowing an easy retrofitting thereof.

Advantageously, the open-door locking system is adapted for being operated by means of a suitable remote actuator with a single hand. The remote actuator is preferably located at an easily accessible position on the hinged door, thereby enabling an ergonomic operation of the remote actuator and the hinged door. The remote actuator may be connected via a cable, e. g. a Bowden cable, with an open-door locking device of the open-door locking system.

The open-door locking system may further be provided with an emergency mechanism that allows a two-hands operation of the open-door locking system, such as e. g. a push bar. Preferably, such an emergency mechanism is at least usable when the remote actuator fails, e. g. if the cable is broken.

Advantageously, the open-door locking system has a comparatively simple configuration and is easy to repair. Furthermore, the hinged door may easily and quickly be removed from the open-door locking system and the assembly as a whole.

The slider comprises a blocking pin that engages the locking notch of the hinge bracket for blocking the hinged door in the open position when the slider is in the blocking position.

In some embodiments, the slider comprises a sliding member that slides in the sliding block when the sliding block slides in the housing in the first direction between the normal position and the actuated position.

Preferably, the slider is coupled to a transfer rod that is equipped with the sliding member.

Preferably, the sliding block comprises a wedge with a ramp, and the sliding member slides along the ramp in a third direction when the sliding block slides in the housing in the first direction.

The third direction may be oblique to the first direction and the second direction.

The first direction may be at least approximately perpendicular to the second direction.

Preferably, the open-door locking device further comprises a slider return spring that biases the slider into the blocking position.

Preferably, the open-door locking device further comprises a sliding block return spring that biases the sliding block into the normal position.

In some embodiments, the open-door locking system further comprises a remote actuator for remotely actuating the open-door locking device, wherein the remote actuator is located spaced apart from the open-door locking device on the hinged door.

Preferably, the open-door locking system may further comprise a cable, in particular a Bowden cable, that connects the remote actuator with the sliding block.

Preferably, the remote actuator may comprise a pivotable thumb lever that is attached to the cable and pivotable for pulling the cable to cause sliding of the sliding block in the housing in the first direction between the normal position and the actuated position.

In some embodiments, the open-door locking device further comprises a push bar that is rigidly attached to the sliding block and operable for manually moving the sliding block in the housing in the first direction between the normal position and the actuated position.

In some embodiments, the slider is in the releasing position and disengaged from the locking notch of the hinge bracket for releasing the hinged door in the open position when the sliding block is in the actuated position.

Moreover, an aircraft may comprise the assembly described above.

Preferred embodiments of the present invention are outlined by way of example in the following description with reference to the attached drawings. In these attached drawings, identical or identically functioning components and elements are labeled with identical reference numbers and characters and are, consequently, only described once in the following description.
- Figure 1 shows a side view of an aircraft with an assembly that comprises a carrier element and a hinged door in accordance with some embodiments,
- Figure 2 shows a perspective view of the assembly of Figure 1 with an open-door locking system in accordance with some embodiments,
- Figure 3 shows a perspective view of a remote actuator of the open-door locking system of Figure 2, in a standby position,
- Figure 4 shows a partially cut front view of a hinge bracket and an open-door locking device of the open-door locking system of Figure 2,
- Figure 5 shows a partially cut side view of the hinge bracket and the open-door locking device of Figure 4, with the hinge bracket in a closed position,
- Figure 6 shows a perspective view of the remote actuator of Figure 2, in an activated position,
- Figure 7 shows a partially cut front view of the hinge bracket and the open-door locking device of Figure 4 during activation of the remote actuator according to Figure 6,
- Figure 8 shows a partially cut side view of the hinge bracket and the open-door locking device of Figure 7, with the hinge bracket in an open position,
- Figure 9 shows a partially cut front view of the hinge bracket and the open-door locking device of Figure 7 during blocking of the hinge bracket, and
- Figure 10 shows a partially cut side view of the hinge bracket and the open-door locking device of Figure 9, with the hinge bracket blocked in an open position.

Exemplary embodiments may be used with any vehicle having a carrier element and a hinged door that is pivotally mounted to the carrier element and pivotable between a closed position and an open position. Examples for vehicles may include aircrafts such as airplanes, quadcopters, helicopters, and drones, land-based vehicles including cars, buses, trucks, and motorcycles, or vessels such as ships and boats, etc.

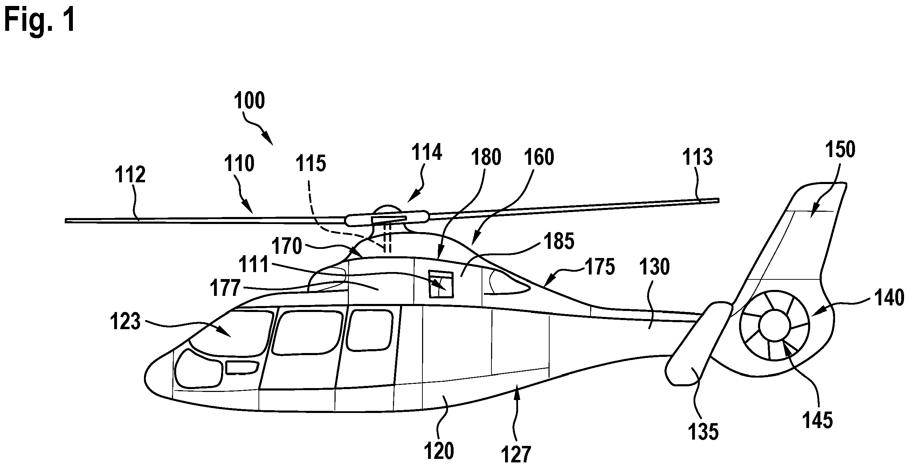

Figure 1 shows an aircraft 100 that is illustratively embodied as a rotary-wing aircraft. The rotary-wing aircraft, which is sometimes also referred to as rotorcraft, is exemplarily illustrated as a helicopter. Thus, for purposes of simplicity and clarity, the aircraft 100 is hereinafter referred to as the "helicopter 100".

Illustratively, the helicopter 100 comprises at least one rotor system 110, which may be embodied as a multi-blade rotor system, for providing lift and forward or backward thrust during operation. The at least one rotor system 110 comprises a plurality of rotor blades 112, 113 and may be powered by at least one engine 111. By way of example, the plurality of rotor blades 112, 113 are mounted at an associated rotor head 114 to a rotor shaft 115, which rotates in operation of the helicopter 100 around an associated rotation axis.

The helicopter 100 illustratively further comprises a fuselage 120 that forms an airframe of the helicopter 100. The fuselage 120 may be connected to a suitable landing gear and illustratively forms a cabin 123 and a rear fuselage 127. The rear fuselage 127 may be connected to a tail boom 130.

The tail boom 130 may be provided with at least one counter-torque device 140 configured to provide counter-torque during operation, i. e. to counter the torque created by rotation of the plurality of rotor blades 112, 113 around the rotor shaft 115 for purposes of balancing the helicopter 100 in terms of yaw. If desired, the counter-torque device 140 may be shrouded.

Illustratively, the at least one counter-torque device 140 is provided at an aft section of the tail boom 130 and may have a tail rotor 145. The aft section of the tail boom 130 may include a fin 150. Furthermore, the tail boom 130 may be provided with a suitable horizontal stabilizer 135.

Moreover, the helicopter 100 may comprise a carrier element 160 with at least one hinged door that is pivotally mounted to the carrier element 160 and pivotable between a closed position and an open position. The carrier element 160 may at least cover the at least one engine 111 of the helicopter 100. If desired, the carrier element 160 may further cover a transmission system of the helicopter 100, which may include a gear box, and/or a crest of the helicopter 100.

By way of example, the carrier element 160 is embodied as a cowling of the helicopter 100 and, therefore, referred to hereinafter as the "cowling 160", for simplicity and clarity. Illustratively, the cowling 160 includes a transmission cowling 170 that covers a transmission system of the helicopter 100, a crest cowling 175 that covers a crest of the helicopter 100, and an engine cowling 180 that covers the at least one engine 111 of the helicopter 100.

The engine cowling 180 is provided with a cowling access door 185 that is pivotally mounted to the engine cowling 180 for providing access to the at least one engine 111. The cowling access door 185 is pivotable between a closed position and an open position. Likewise, and by way of example, the transmission cowling 170 is provided with a cowling access door 177 that is pivotally mounted to the transmission cowling 170 for providing access to a transmission system. Similarly, the crest cowling 175 may also be provided with a suitable cowling access door.

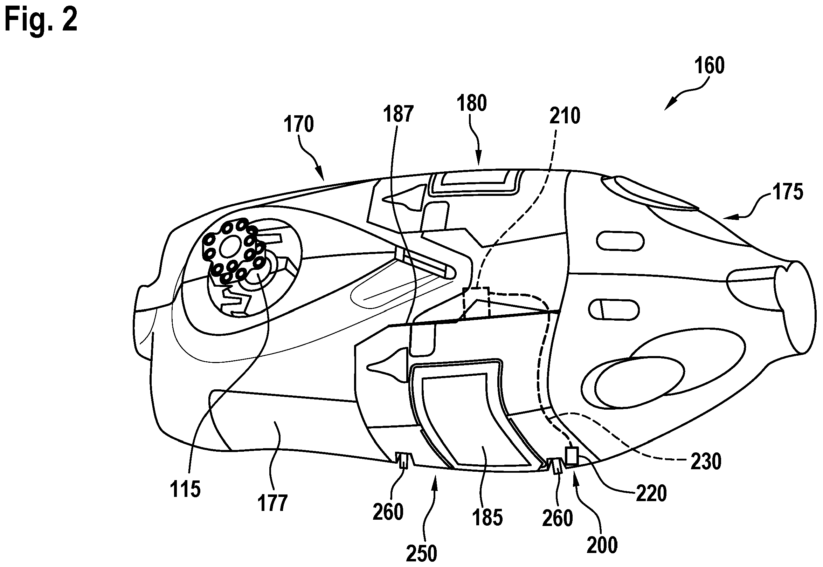

Figure 2 shows the cowling 160 of Figure 1, which comprises the transmission cowling 170, the crest cowling 175, and the engine cowling 180. The transmission cowling 170 comprises the cowling access door 177 and the engine cowling 180 comprises the cowling access door 185. Illustratively, the cowling access door 185 is pivotable around an associated hinge axis 187 at the engine cowling 180.

At least the cowling access door 185, but preferably also each other cowling access door including the cowling access door 177, is pivotable between a closed position and an open position. In the closed position, the cowling access door 185, for instance, may close an opening in the engine cowling 180, thereby preventing access from outside of the engine cowling 180 to associated machinery, i. e. the at least one engine 111 of Figure 1. In the open position, the cowling access door 185, for instance, may provide access from outside of the engine cowling 180 to the associated machinery, i. e. the at least one engine 111 of Figure 1. For example, the cowling access door 185 may provide access for performing maintenance work on the associated machinery, i. e. the at least one engine 111 of Figure 1.

At least the cowling access door 185, but preferably also each other cowling access door including the cowling access door 177, is provided with an open-door locking system 200. The cowling access door 185 and the open-door locking system 200 form together with the engine cowling 160 a cowling assembly 250.

In the cowling assembly 250, the open-door locking system 200 comprises an open-door locking device 210 for blocking the cowling access door 185 in an open position. The cowling access door 185 may be locked in a closed position by means of suitable latches 260.

The open-door locking system 200 may further comprise a remote actuator 220 for remotely actuating the open-door locking device 210. Illustratively, the remote actuator 220 is coupled to the open-door locking device 210 via a cable 230, e. g. a Bowden cable. By way of example, the remote actuator 220 is located spaced apart from the open-door locking device 210 on the cowling access door 185.

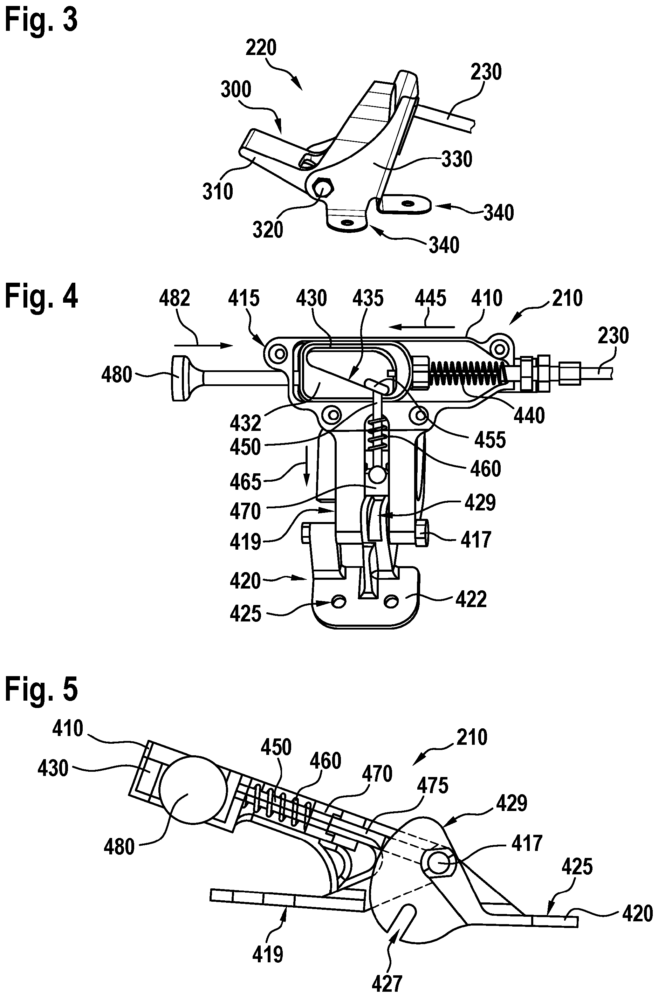

The remote actuator 220 is preferably adapted for remotely actuating the open-door locking system 200 as a whole. The open-door locking system 200 is described in more detail below at Figure 3 to Figure 10.

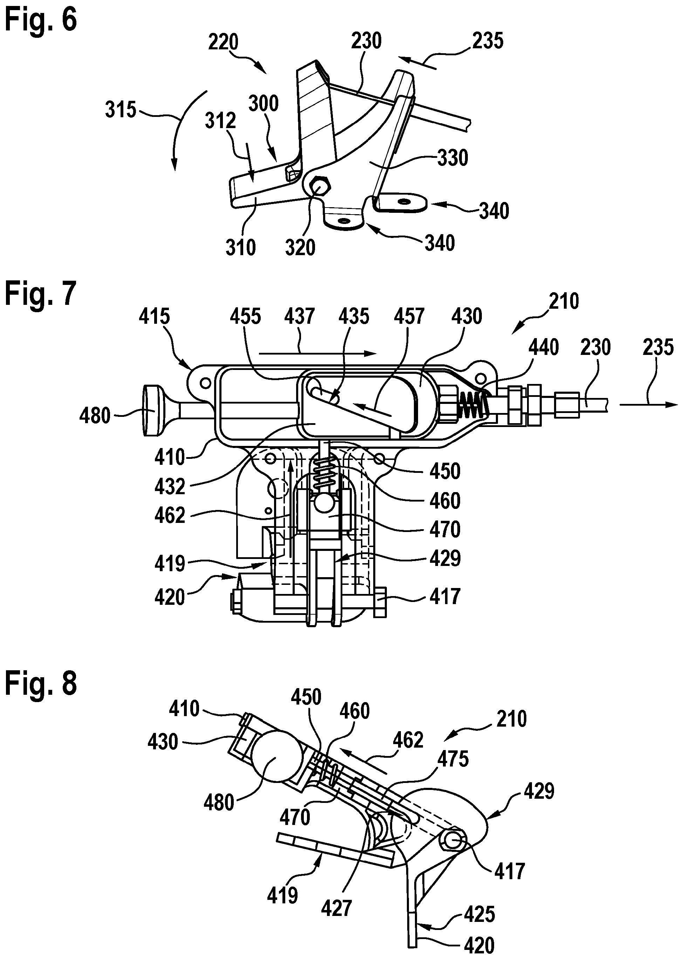

Figure 3 shows the remote actuator 220 with the cable 230 of Figure 2. Illustratively, the remote actuator 220 comprises a pivotable thumb lever 300 that is attached to the cable 230 and pivotable around a pivot bearing 320. The pivotable thumb lever 300 illustratively comprises a push arm 310 which may be pushed for pivoting the pivotable thumb lever 300 around the pivot bearing 320 and, thus, pulling the cable 230, as illustrated in Figure 6.

By way of example, the pivotable thumb lever 300 is pivotally mounted to an associated hinge bracket 330 via the pivot bearing 320. The hinge bracket 330, in turn, may comprise suitable fixations 340 which are preferably rigidly mounted to the cowling access door 185 of Figure 2.

Figure 4 shows the open-door locking device 210 of the open-door locking system 200 of Figure 1. The open-door locking device 210 is preferably connected via the cable 230 of Figure 3 to the remote actuator 220 of Figure 3.

According to the present invention, the open-door locking system 200 comprises a hinge bracket 420. The hinge bracket 420 is rigidly attached to the engine cowling 180 of Figure 2 and comprises a locking notch (427, e. g. in Figure 5). Illustratively, the hinge bracket 420 comprises a connecting part 422 with suitable fixations 425 for attachment to the engine cowling 180 of Figure 2. By way of example, the connecting part 422 is plate-shaped and the fixations 425 are embodied as through holes to enable a bolted or screwed connection of the hinge bracket 420 with the engine cowling 180 of Figure 2.

Furthermore, the hinge bracket 420 is pivotally mounted to a mounting bracket 419 of the open-door locking device 210. For instance, the hinge bracket 420 may comprise a bulge-shaped portion 429 which may be mounted pivotally to the mounting bracket 419 via a pivot bearing 417.

The mounting bracket 419, in turn, is connected to a housing 410 of the open-door locking device 210, which is rigidly attached to the cowling access door 185 of Figure 2. By way of example, the housing 410 comprises fixations 415 for attachment to the cowling access door 185 of Figure 2. Illustratively, the fixations 415 are embodied as through holes to enable a bolted or screwed connection of the housing 410 with the cowling access door 185 of Figure 2.

The housing 410 accommodates a sliding block 430 that is slidable in the housing 410 between a normal position and an actuated position. The sliding block 430 may be biased by a sliding block return spring 440 of the open-door locking device 210 in a sliding block return direction 445 into the normal position and is, illustratively, shown in the normal position. Preferably, the sliding block 430 is connected via the cable 230, in particular a Bowden cable, to the remote actuator 220 of Figure 3, i. e. to the pivotable thumb lever 300 of Figure 3.

By way of example, the sliding block 430 is in addition rigidly attached to a push bar 480 of the open-door locking device 210. The push bar 480 is preferably operable for being manually moved in a direction 482 and, thus, moving the sliding block 430 in the housing 410 between the normal position and the actuated position. Accordingly, the push bar 480 embodies an emergency mechanism that may still be used if e. g. the cable 230 is broken.

The housing 410 further accommodates a slider 470 that is slidable in the housing 410 between a blocking position and a releasing position. The slider 470 may be biased by a slider return spring 460 of the open-door locking device 210 in a slider return direction 465 into the blocking position and is, illustratively, shown in the blocking position.

The slider 470 is coupled to the sliding block 430 such that the slider 470 is in the blocking position and engages the locking notch (427, e. g. in Figure 5) of the hinge bracket 420 for blocking the cowling access door 185 of Figure 2 in an open position when the sliding block 430 is in the normal position. More specifically, the slider 470 may comprise a sliding member 455 that slides in the sliding block 430 when the sliding block 430 slides in the housing 410 between the normal position and the actuated position.

By way of example, the sliding block 430 may comprise a wedge 432 with a ramp 435 such that the sliding member 455 slides along the ramp 435 when the sliding block 430 slides in the housing 410 between the normal position and the actuated position. Illustratively, the sliding member 455 is connected to, or integrally formed with, a transfer rod 450 that is coupled to the slider 470.

Figure 5 shows the open-door locking device 210 of Figure 4 which comprises the housing 410 with the mounting bracket 419 that is pivotally mounted to the hinge bracket 420 of Figure 4. The hinge bracket 420 comprises a locking notch 427. By way of example, the locking notch 427 is formed in the bulge-shaped portion 429 of Figure 4 of the hinge bracket 420.

Figure 5 further illustrates the slider 470 of Figure 4 which is biased by the slider return spring 460 of Figure 4 that is illustratively arranged on the transfer rod 450 of Figure 4. The transfer rod 450 of Figure 4 is coupled to the sliding block 430 via the sliding member 455 of Figure 4. The sliding block 430 is rigidly attached to the push bar 480.

Furthermore, the slider 470 may be equipped with a blocking pin 475. The blocking pin 475 is preferably provided for engagement with the locking notch 427 in the blocking position of the slider 470.

Figure 6 shows the remote actuator 220 with the cable 230 of Figure 3, which comprises the pivotable thumb lever 300 that is attached to the cable 230 and pivotally mounted to the hinge bracket 330 via the pivot bearing 320. The pivotable thumb lever 300 comprises the push arm 310 which may be pushed for pivoting the pivotable thumb lever 300 around the pivot bearing 320 and, thus, pulling the cable 230.

More specifically, if the push arm 310 is pushed in a direction 312, the pivotable thumb lever 300 pivots around the pivot bearing 320 in a pivoting direction 315. As a result, the cable 230 is pulled in a direction 235.

Figure 7 shows the open-door locking device 210 of Figure 4 which is preferably connected to the remote actuator 220 of Figure 6 via the cable 230, and which comprises the mounting bracket 419 that is pivotally mounted via the pivot bearing 417 to the hinge bracket 420 of Figure 4. The mounting bracket 419 is connected to the housing 410 of the open-door locking device 210. The housing 410 and the hinge bracket 420 are illustrated in a relative positioning with respect to each other that corresponds to the open position of the cowling access door 185 of Figure 2.

Furthermore, according to Figure 4 the housing 410 accommodates the sliding block 430 that is biased by the sliding block return spring 440 and further accommodates the slider 470 which is biased by the slider return spring 460. The sliding block 430 is preferably connected to the remote actuator 220 of Figure 6 via the cable 230 and comprises the wedge 432 with the ramp 435. The slider 470 comprises the sliding member 455 that is connected to, or integrally formed with, the transfer rod 450.

More specifically, Figure 7 illustrates functioning of the open-door locking device 210 in response to pulling the cable 230 in the direction 235 of Figure 6. As a result of pulling the cable 230 in the direction 235, the sliding block 430 is pulled against a biasing force of the sliding block return spring 440 in the direction 235 and, thus, slides in the housing 410 in a direction 437 from its normal position according to Figure 4 into an illustrated actuated position. However, instead of being pulled by the cable 230, the sliding block 430 may also be pushed by pushing the push bar 480 in the direction 482 of Figure 4 when the push bar 480 is accessible.

While the sliding block 430 slides in the direction 437 from the normal position towards the actuated position, the sliding member 455 slides along the ramp 435 of the sliding block 430 in a direction 457. Thus, the slider 470 is pulled against a biasing force of the slider return spring 460 in a direction 462 and, therefore, slides in the housing 410 in a direction 462 towards a releasing position. At that point, the housing 410 may be pivoted relative to the hinge bracket 420 into the illustrated positioning that corresponds to the open position of the cowling access door 185 of Figure 2.

By way of example, the direction 457 may be oblique to the direction 437 and the direction 462. Furthermore, the direction 437 may be at least approximately perpendicular to the direction 462.

Figure 8 shows the open-door locking device 210 of Figure 7 which comprises the housing 410 with the slider 470 and the mounting bracket 419 that is pivotally mounted to the hinge bracket 420 of Figure 7. The hinge bracket 420 comprises the locking notch 427. The slider 470 is equipped with the blocking pin 475 according to Figure 5 and is pulled against the biasing force of the slider return spring 460 in the direction 462 into the releasing position.

According to Figure 7, the housing 410 and the hinge bracket 420 are illustrated in the relative positioning with respect to each other that corresponds to the open position of the cowling access door 185 of Figure 2. Accordingly, the blocking pin 475 and the locking notch 427 are aligned with respect to each other. However, the blocking pin 475 is not engaged with the locking notch 427.

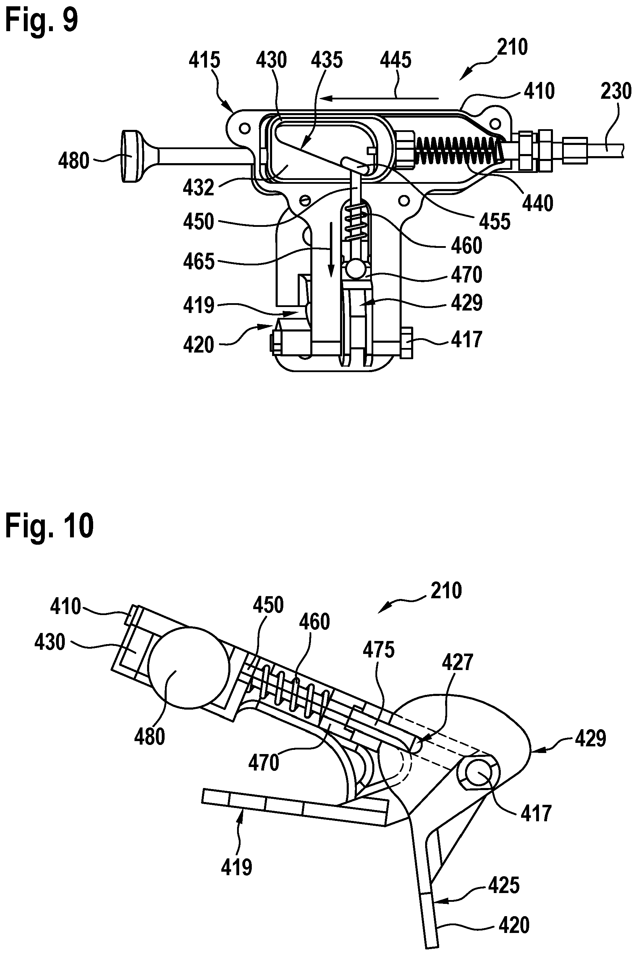

Figure 9 shows the open-door locking device 210 of Figure 7 which is preferably connected to the remote actuator 220 of Figure 6 via the cable 230, and which comprises the mounting bracket 419 that is pivotally mounted via the pivot bearing 417 to the hinge bracket 420 of Figure 7. The mounting bracket 419 is connected to the housing 410 of the open-door locking device 210. The housing 410 and the hinge bracket 420 are illustrated in a relative positioning with respect to each other that corresponds to the open position of the cowling access door 185 of Figure 2.

Furthermore, according to Figure 7 the housing 410 accommodates the sliding block 430 that is biased by the sliding block return spring 440 and further accommodates the slider 470 which is biased by the slider return spring 460. The sliding block 430 is preferably connected to the remote actuator 220 of Figure 6 via the cable 230 and comprises the wedge 432 with the ramp 435. The slider 470 comprises the sliding member 455 that is connected to, or integrally formed with, the transfer rod 450.

In Figure 7, the sliding block 430 is pulled against a biasing force of the sliding block return spring 440 into the actuated position and the slider 470 is pulled against a biasing force of the slider return spring 460 into the releasing position, both in response to pulling the cable 230 in the direction 235 of Figure 7 by means of pivoting the pivotable thumb lever 300 of Figure 6 into the pivoting direction 315 of Figure 6. By releasing the pivotable thumb lever 300, the cable 230 is released and, consequently, the sliding block return spring 440 is freed and pushes the sliding block 430 in the sliding block return direction 445 from the actuated position into the normal position, as illustrated in Figure 9. By the movement of the sliding block 430, the slider return spring 460 is likewise freed and pushes the slider 470 in the slider return direction 465 from the releasing position into the blocking position for blocking the hinge bracket 420.

Figure 10 shows the open-door locking device 210 of Figure 9 which comprises the housing 410 with the slider 470 and the mounting bracket 419 that is pivotally mounted to the hinge bracket 420 of Figure 9. The hinge bracket 420 comprises the locking notch 427. The slider 470 is equipped with the blocking pin 475 according to Figure 8 and is pushed by the slider return spring 460 towards the hinge bracket 420, where the blocking pin 475 engages the locking notch 427 in the blocking position of the slider 470 for blocking the hinge bracket 420 in a position that corresponds to the open position of the cowling access door 185 of Figure 2.

It should be noted that modifications to the above described embodiments are within the common knowledge of the person skilled in the art and, thus, also considered as being part of the present invention. For instance, the remote actuator 220 of Figure 3 or Figure 6 is shown with a pivotable thumb lever 300 that pulls on the cable 230. However, the remote actuator 220 may include any means with which the cable 230 may be pulled. For example, remote actuator 220 may include a handle and/or may be actuated with any finger instead of the thumb.

Moreover, it is described above that e. g. the housing 410 of the open-door locking device 210 of Figure 4 is attached to the cowling access door 185 and that the hinge bracket 420 is attached to the engine cowling 180. However, the housing 410 may alternatively be attached to the engine cowling 180 and the hinge bracket 420 may be attached to the cowling access door 185.

Furthermore, it is described above that the sliding member 455 slides along the ramp 435 of the sliding block 430. However, instead of the sliding member 455 any element that is movable along the ramp 435 is likewise considered, such as e. g. a roller bearing and so on.

Finally, although only an illustrative opening and blocking procedure is described above with reference to Figure 6 to Figure 10, it is considered to be clear to the skilled reader that a respective closing and releasing procedure may be performed in the same manner, i. e. starting with Figure 6. However, the blocked cowling access door 185 should preferably be lifted minimally only to relieve the blocking pin 475 in the locking notch 427 such that the pivotable thumb lever 300 of Figure 6 may be operated easily without requiring an excessive force.

### Reference List

- 100: helicopter
- 110: multi-blade rotor system
- 111: engine
- 112, 113: rotor blades
- 114: rotor head
- 115: rotor shaft
- 120: fuselage
- 123: cabin
- 127: rear fuselage
- 130: tail boom
- 135: horizontal stabilizer
- 140: counter-torque device
- 145: tail rotor
- 150: fin
- 160: cowling
- 170: transmission cowling
- 175: crest cowling
- 177: transmission cowling access door
- 180: engine cowling
- 185: engine cowling access door
- 187: cowling access door hinge axis
- 200: open-door locking system
- 210: open-door locking device
- 220: remote actuator
- 230: Bowden cable
- 235: cable pulling direction
- 250: cowling assembly
- 260: cowling access door latches
- 300: pivotable thumb lever
- 310: push arm
- 312: push direction
- 315: pivoting direction
- 320: pivot bearing
- 330: thumb lever hinge bracket
- 340: hinge bracket fixations
- 410: housing
- 415: housing fixations
- 417: pivot bearing
- 419: mounting bracket
- 420: hinge bracket
- 422: connecting part
- 425: hinge bracket fixations
- 427: locking notch
- 429: bracket bulge
- 430: sliding block
- 432: sliding block wedge
- 435: wedge ramp
- 437: sliding block actuation movement direction
- 440: return spring
- 445: return direction
- 450: transfer rod
- 455: sliding member
- 457: sliding member sliding direction
- 460: return spring
- 462: transfer rod actuation movement direction
- 465: return direction
- 470: slider
- 475: blocking pin
- 480: push bar
- 482: pushing direction.

## Claims

1. An assembly (250) with a carrier element (180), a hinged door (185) that is pivotally mounted to the carrier element (180) and pivotable between a closed position and an open position, and an open-door locking system (200) for locking the hinged door (185) in the open position, **characterized in that** the open-door locking system (200) comprises:
a hinge bracket (420) that is rigidly attached to the carrier element (180), wherein the hinge bracket (420) comprises a locking notch (427); and
an open-door locking device (210) comprising:
a mounting bracket (419) that is pivotally mounted to the hinge bracket (420);
a housing (410) that is connected to the mounting bracket (419) and rigidly attached to the hinged door (185);
a sliding block (430) that is accommodated in the housing (410) and slidable in the housing (410) in a first direction (437) between a normal position and an actuated position;
a slider (470) that is accommodated in the housing (410) and slidable in the housing (410) in a second direction (462) between a blocking position and a releasing position, wherein the slider (470) is coupled to the sliding block (430) such that the slider (470) is in the blocking position and engages the locking notch (427) of the hinge bracket (420) for blocking the hinged door (185) in the open position when the sliding block (430) is in the normal position; and
wherein the slider (470) comprises a blocking pin (475) that engages the locking notch (427) of the hinge bracket (420) for blocking the hinged door (185) in the open position when the slider (470) is in the blocking position.

2. The assembly (250) of claim 1, wherein the slider (470) comprises a sliding member (455) that slides in the sliding block (430) when the sliding block (430) slides in the housing (410) in the first direction (437) between the normal position and the actuated position.

3. The assembly (250) of claim 2, wherein the slider (470) is coupled to a transfer rod (450) that is equipped with the sliding member (455).

4. The assembly (250) of claim 2 or 3, wherein the sliding block (430) comprises a wedge (432) with a ramp (435), and wherein the sliding member (455) slides along the ramp (435) in a third direction (457) when the sliding block (430) slides in the housing (410) in the first direction (437).

5. The assembly (250) of claim 4, wherein the third direction (457) is oblique to the first direction (437) and the second direction (462).

6. The assembly (250) of any one of the preceding claims, wherein the first direction (437) is at least approximately perpendicular to the second direction (462).

7. The assembly (250) of any one of the preceding claims, wherein the open-door locking device (210) further comprises a slider return spring (460) that biases the slider (470) into the blocking position.

8. The assembly (250) of any one of the preceding claims, wherein the open-door locking device (210) further comprises a sliding block return spring (440) that biases the sliding block (430) into the normal position.

9. The assembly (250) of any one of the preceding claims, wherein the open-door locking system (200) further comprises a remote actuator (220) for remotely actuating the open-door locking device (210), wherein the remote actuator (220) is located spaced apart from the open-door locking device (210) on the hinged door (185).

10. The assembly (250) of claim 9, wherein the open-door locking system (200) further comprises a cable (230), in particular a Bowden cable, that connects the remote actuator (220) with the sliding block (430).

11. The assembly (250) of claim 10, wherein the remote actuator (220) comprises a pivotable thumb lever (300) that is attached to the cable (230) and pivotable for pulling the cable (230) to cause sliding of the sliding block (430) in the housing (410) in the first direction (437) between the normal position and the actuated position.

12. The assembly (250) of any one of the preceding claims, wherein the open-door locking device (210) further comprises a push bar (480) that is rigidly attached to the sliding block (430) and operable for manually moving the sliding block (430) in the housing (410) in the first direction (437) between the normal position and the actuated position.

13. The assembly (250) of any one of the preceding claims, wherein the slider (470) is in the releasing position and disengaged from the locking notch (427) of the hinge bracket (420) for releasing the hinged door (185) in the open position when the sliding block (430) is in the actuated position.

14. An aircraft (100) comprising an assembly (250) according to any one of the preceding claims.

## Patentansprüche

1. Baugruppe (250) mit einem Trägerelement (180), einer Schwenktür (185), die schwenkbar am Trägerelement (180) gelagert ist und zwischen einer geschlossenen Position und einer offenen Position schwenkbar ist, und einem Offenverriegelungssystem (200) zum Verriegeln der Schwenktür (185) in der offenen Position, **dadurch gekennzeichnet, dass** das Offenverriegelungssystem (200) umfasst:
eine Scharnierhalterung (420), die fest mit dem Trägerelement (180) verbunden ist, wobei die Scharnierhalterung (420) eine Verriegelungskerbe (427) umfasst; und
eine Offenverriegelungsvorrichtung (210), umfassend:
eine Befestigungshalterung (419), die schwenkbar an der Scharnierhalterung (420) angebracht ist;
ein Gehäuse (410), das mit der Befestigungshalterung (419) verbunden und fest an der Schwenktür (185) angebracht ist;
einen Gleitblock (430), der im Gehäuse (410) aufgenommen ist und im Gehäuse (410) in einer ersten Richtung (437) zwischen einer Normalposition und einer Betätigungsposition verschiebbar ist;
einen Schieber (470), der im Gehäuse (410) aufgenommen ist und im Gehäuse (410) in einer zweiten Richtung (462) zwischen einer Blockierposition und einer Freigabeposition verschiebbar ist, wobei der Schieber (470) mit dem Gleitblock (430) derart gekoppelt ist, dass sich der Schieber (470) in der Blockierposition befindet und in die Verriegelungskerbe (427) der Scharnierhalterung (420) eingreift, um die Schwenktür (185) in der offenen Position zu blockieren, wenn sich der Gleitblock (430) in der Normalposition befindet; und
wobei der Schieber (470) einen Blockierstift (475) umfasst, der in die Verriegelungskerbe (427) der Scharnierhalterung (420) eingreift, um die Schwenktür (185) in der offenen Position zu blockieren, wenn sich der Schieber (470) in der Blockierposition befindet.

2. Baugruppe (250) nach Anspruch 1, bei der der Schieber (470) ein Gleitelement (455) umfasst, das im Gleitblock (430) gleitet, wenn der Gleitblock (430) im Gehäuse (410) in der ersten Richtung (437) zwischen der Normalposition und der Betätigungsposition gleitet.

3. Baugruppe (250) nach Anspruch 2, bei der der Schieber (470) mit einer Übertragungsstange (450) gekoppelt ist, die mit dem Gleit-
element (455) ausgestattet ist.

4. Baugruppe (250) nach Anspruch 2 oder 3, bei der der Gleitblock (430) einen Keil (432) mit einer Rampe (435) umfasst und das Gleitelement (455) entlang der Rampe (435) in einer dritten Richtung (457) gleitet, wenn der Gleitblock (430) im Gehäuse (410) in der ersten Richtung (437) gleitet.

5. Baugruppe (250) nach Anspruch 4, bei der die dritte Richtung (457) schräg zur ersten Richtung (437) und zur zweiten Richtung (462) verläuft.

6. Baugruppe (250) nach einem der vorstehenden Ansprüche, bei der die erste Richtung (437) zumindest annähernd senkrecht zur zweiten Richtung (462) verläuft.

7. Baugruppe (250) nach einem der vorstehenden Ansprüche, bei der die Verriegelungsvorrichtung (210) für die offene Tür ferner eine Rückstellfeder (460) für den Schieber umfasst, die den Schieber (470) in die Blockierposition vorspannt.

8. Baugruppe (250) nach einem der vorstehenden Ansprüche, bei der die Offenverriegelungsvorrichtung (210) ferner eine Rückstellfeder (440) für den Gleitblock umfasst, die den Gleitblock (430) in die Normalposition vorspannt.

9. Baugruppe (250) nach einem der vorstehenden Ansprüche, bei der das Offenverriegelungssystem (200) ferner einen Fernbetätiger (220) zum Fernbetätigen der Offenverriegelungsvorrichtung (210) umfasst, wobei der Fernbetätiger (220) an der Schwenktür (185) in einem Abstand von der Offenverriegelungsvorrichtung (210) angeordnet ist.

10. Baugruppe (250) nach Anspruch 9, bei der das Offenverriegelungssystem (200) ferner ein Seil (230), insbesondere einen Bowdenzug, umfasst, das den Fernbetätiger (220) mit dem Gleitblock (430) verbindet.

11. Baugruppe (250) nach Anspruch 10, bei dem der Fernbetätiger (220) einen schwenkbaren Daumenhebel (300) umfasst, der an dem Seil (230) befestigt und schwenkbar ist, um das Seil (230) zu ziehen und so ein Gleiten des Gleitblocks (430) im Gehäuse (410) in der ersten Richtung (437) zwischen der Normalposition und der Betätigungsposition zu bewirken.

12. Baugruppe (250) nach einem der vorstehenden Ansprüche, bei der die Offenverriegelungsvorrichtung (210) ferner eine Druckstange (480) umfasst, die starr am Gleitblock (430) befestigt ist und betätigbar ist, um den Gleitblock (430) im Gehäuse (410) manuell in der ersten Richtung (437) zwischen der Normalposition und der Betätigungsposition zu bewegen.

13. Baugruppe (250) nach einem der vorstehenden Ansprüche, bei der sich der Schieber (470) in der Freigabeposition befindet und aus der Verriegelungskerbe (427) der Scharnierhalterung (420) ausgerückt wird, um die Schwenktür (185) in der offenen Position freizugeben, wenn sich der Gleitblock (430) in der Betätigungsposition befindet.

14. Luftfahrzeug (100) mit einer Baugruppe (250) nach einem der vorstehenden Ansprüche.

## Revendications

1. Ensemble (250) avec un élément (180) porteur, une porte (185) à articulation qui est montée à pivotement sur l'élément (180) porteur et est apte à pivoter entre une position fermée et une position ouverte, et un système (200) de verrouillage de porte en position ouverte afin de verrouiller la porte (185) à articulation en position ouverte, **caractérisé en ce que** le système (200) de verrouillage de porte en position ouverte comprend :
un support (420) d'articulation qui est fixé de façon rigide sur l'élément (180) porteur, dans lequel le support (420) d'articulation comprend une encoche (427) de verrouillage ; et
un dispositif (210) de verrouillage de porte en position ouverte comprenant :
un support (419) de montage qui est monté à pivotement sur le support (420) d'articulation ;
un logement (410) qui est raccordé au support (419) de montage et fixé de façon rigide sur la porte (185) à articulation ;
un bloc (430) coulissant qui est aménagé dans le logement (410) et est apte à coulisser dans le logement (410) suivant une première direction (437) entre une position de repos et une position actionnée ;
un coulisseau (470) qui est aménagé dans le logement (410) et est apte à coulisser dans le logement (410) suivant une deuxième direction (462) entre une position de blocage et une position de libération, dans lequel le coulisseau (470) est couplé au bloc (430) coulissant de sorte que le coulisseau (470) se retrouve en position de blocage et s'enclenche dans l'encoche (427) de verrouillage du support (420) d'articulation afin de bloquer la porte (185) à articulation en position ouverte lorsque le bloc (430) coulissant est en position de repos ; et
dans lequel le coulisseau (470) comprend un doigt (475) de blocage qui s'enclenche dans l'encoche (427) de verrouillage du support (420) d'articulation afin de bloquer la porte (185) à articulation en position ouverte lorsque le coulisseau (470) est en position de blocage.

2. Ensemble (250) selon la revendication 1, dans lequel le coulisseau (470) comprend un élément (455) coulissant qui coulisse dans le bloc (430) coulissant lorsque le bloc (430) coulissant coulisse dans le logement (410) suivant la première direction (437) entre la position de repos et la position actionnée.

3. Ensemble (250) selon la revendication 2, dans lequel le coulisseau (470) est couplé à une tige (450) de transmission qui est munie de l'élément (455) coulissant.

4. Ensemble (250) selon la revendication 2 ou 3, dans lequel le bloc (430) coulissant comprend un élément (432) en forme de coin présentant une rampe (435), et dans lequel l'élément (455) coulissant coulisse le long de la rampe (435) suivant une troisième direction (457) lorsque le bloc (430) coulissant coulisse dans le logement (410) suivant la première direction (437).

5. Ensemble (250) selon la revendication 4, dans lequel la troisième direction (457) est oblique par rapport à la première direction (437) et à la deuxième direction (462).

6. Ensemble (250) selon l'une quelconque des revendications précédentes, dans lequel la première direction (437) est au moins approximativement perpendiculaire à la deuxième direction (462).

7. Ensemble (250) selon l'une quelconque des revendications précédentes, dans lequel le dispositif (210) de verrouillage de porte en position ouverte comprend en outre un ressort (460) de rappel de coulisseau qui déplace le coulisseau (470) vers la position de blocage.

8. Ensemble (250) selon l'une quelconque des revendications précédentes, dans lequel le dispositif (210) de verrouillage de porte en position ouverte comprend en outre un ressort (440) de rappel de bloc coulissant qui déplace le bloc (430) coulissant vers la position de repos.

9. Ensemble (250) selon l'une quelconque des revendications précédentes, dans lequel le système (200) de verrouillage de porte en position ouverte comprend en outre un actionneur (220) à distance afin d'actionner à distance le dispositif (210) de verrouillage de porte en position ouverte, dans lequel l'actionneur (220) à distance est positionné à distance du dispositif (210) de verrouillage de porte en position ouverte sur la porte (185) à articulation.

10. Ensemble (250) selon la revendication 9, dans lequel le système (200) de verrouillage de porte en position ouverte comprend en outre un câble (230), en particulier un câble Bowden, qui relie l'actionneur (220) à distance au bloc (430) coulissant.

11. Ensemble (250) selon la revendication 10, dans lequel l'actionneur (220) à distance comprend un levier (300) actionnable manuellement et apte au pivotement qui est fixé sur le câble (230) et est apte à pivoter afin d'exercer une traction sur le câble (230) pour provoquer le coulissement du bloc (430) coulissant dans le logement (410) suivant la première direction (437) entre la position de repos et la position actionnée.

12. Ensemble (250) selon l'une quelconque des revendications précédentes, dans lequel le dispositif (210) de verrouillage de porte en position ouverte comprend en outre une tige (480) à poussoir qui est fixée de façon rigide sur le bloc (430) coulissant et est manœuvrable afin de déplacer manuellement le bloc (430) coulissant dans le logement (410) suivant la première direction (437) entre la position de repos et la position actionnée.

13. Ensemble (250) selon l'une quelconque des revendications précédentes, dans lequel le coulisseau (470) est en position de libération et déclenché de l'encoche (427) de verrouillage du support (420) d'articulation afin de libérer la porte (185) à articulation en position ouverte lorsque le bloc (430) coulissant est en position actionnée.

14. Aéronef (100) comprenant un ensemble (250) selon l'une quelconque des revendications précédentes.
